# EUROPEAN PATENT SPECIFICATION

(11) **EP 2 467 439 B1**
(45) Date of publication and mention of the grant of the patent: **04.06.2014**
(21) Application number: 10810277.3
(22) Date of filing: 18.08.2010
(51) Int. Cl.: C09D 175/04, C09D 5/02, C03C 17/32, B65D 1/00, A47G 19/00

(54) **COATING COMPOSITIONS FOR GLASS SUBSTRATES**
BESCHICHTUNGSZUSAMMENSETZUNGEN FÜR GLASSUBSTRATE
COMPOSITIONS DE REVÊTEMENT POUR DES SUBSTRATS DE VERRE

(30) Priority: 18.08.2009 US 542843
(43) Date of publication of application: 27.06.2012
(73) Proprietor: Bayer MaterialScience LLC, Pittsburgh, PA 15205-9741 (US)
(72) Inventor: STEWART, Raymond, Lawrence PA 15055 (US); GRACE, Scott, A., Coraopolis PA 15108-9032 (US); POSTUPACK, Dennis, Alpharetta, GA 30022 (US); MATTOS, Louis, Douglasville GA 30135 (US); SUBRAMANIAN, Ramesh, Coraopolis PA 15108 (US); EKIN, Abdullah, Imperial PA 15126 (US); STEWARD, Sterling, L., Douglasville GA 30135 (US); MUBARAK, Christopher, R., Alpharetta GA 30005 (US); POHL, Torsten, D51377 Leverkusen (DE)
(74) Representative: BIP Patents
(86) International application number: PCT/US2010/002267
(87) International publication number: WO 2011/022055

(56) References cited:
- EP-A1- 0 827 972
- EP-A1- 1 721 947
- US-A- 5 723 536
- US-A- 5 804 647
- US-A- 5 852 106
- US-A- 5 852 106

## Description

### BACKGROUND OF THE INVENTION

The present invention relates to aqueous polyurethane coating compositions and particularly to their use for coating glass substrates.

Glass surfaces may be provided with a coating for decorative or safety reasons (anti-shattering). However, in addition to the anti-shattering effect, other severe requirements may have to be fulfilled, such as abrasion resistance, elasticity, water resistance and alkali resistance.

In the case of glass bottles, the clear coating should not become turbid as a result of the frequent washing operations required for a refillable glass bottle and its mechanical properties should also not be degraded by the hot, alkaline washing fluid. It is also advantageous if the coating demonstrates toughness to help minimize mechanical damage, such as scuffing, to the bottle during filling operations and transport.

Solvent-free systems which may be applied as a single component are advantageous. EP-A 25,992 and EP-A 25,994 describe coating compositions containing polyester-based NCO prepolymers, which are crosslinked with pure melamine without solvents. However, the stoving temperature of above 180°C and the only moderate resistance to alkaline washing detergents are disadvantageous.

EP-A 519,074 describes an aqueous glass coating composition that is applied in two coats, wherein the topcoat substantially contains three main components: a polyurethane dispersion, an aqueous epoxy resin and an aqueous melamine/ formaldehyde resin. The polyurethane dispersion used is a commercially available product of undisclosed composition, which achieves the required final properties only after the addition of substantial quantities of the other two resins. In contrast, the glass coating compositions according to the invention only require polyurethane structural units and may be applied as a single component.

U.S. Patent No. 4,280,944 describes aqueous polyether-based polyurethane dispersions, which, by virtue of the free hydroxyl groups and blocked isocyanate groups contained therein, constitute a single component system, which can be thermally post-cured. However, good adhesion to glass and increased resistance to alkali also demand an increased crosslinking density, which can only be achieved with difficulty using the compositions described therein.

Relatively high crosslinking densities are achievable if OH-functional polyurethane dispersions are combined with aqueous, blocked polyisocyanate crosslinking agents. These systems, which contain two components, may be applied as a single component and crosslink under the action of heat. However, the examples of EP-A 566,953 and EP-A 576,952 only describe polyester-based compositions having moderate resistance to alkalies.

U.S. Patent No. 5,852,106 describes aqueous coating compositions for glass bottles. While such systems demonstrate good alkali resistance, it is conventional to add melamine to such compositions to increase toughness or hardness for some applications. However, the uses of melamine may lead to some undesirable characteristics, such as increased haze and yellowing, decreased pot life and storage stability and increased brittleness. Further, the melamine reacts with the polyol in such a system, meaning a formulator is constrained in terms of the initial NCO:OH ratio (i.e. there must be excess OH groups) if melamine is used.

An object of the present invention is to provide coating compositions, which are suitable for glass surfaces and have, in addition to outstanding optical properties, good adhesion, increased abrasion resistance, elasticity, toughness, water resistance and alkali resistance, in particular to hot, alkaline washing media.

This object may be obtained with the coating compositions according to the invention, which are described below in greater detail.

### SUMMARY OF THE INVENTION

The present invention relates to an aqueous polyurethane coating composition comprising:
1) 1 to 99 wt.% based on solid polymer of the reaction product of:
   a) a polyol component, which is soluble or dispersible in water and is the reaction product of a polyisocyanate component containing 50 to 100 wt. % of an aliphatic diisocyanate, a polyol component containing one or more polyether polyols and having an OH number of 25 to 350 mg KOH/g solids and an isocyanate-reactive component containing at least one group capable of salt formation; and
   b) polyisocyanate component, which is soluble or dispersible in water, has blocked isocyanate groups and is the reaction product of one or more polyisocyanates having an isocyanurate group content of 0 to 30 wt. %, a reversible, monofunctional blocking agent for isocyanate groups, a nonionic hydrophilic component and a stabilizing component which has 1 to 2 hydrazide groups and a molecular weight of 74 to 300; and
2) 1 to 99 wt.% based on solid polymer of an aqueous polyurethane dispersion prepared from at least one polycarbonate polyol,
wherein the total wt. % of components 1) and 2) add up to 100%.

### DETAILED DESCRIPTION OF THE INVENTION

More particularly, the present invention relates to aqueous polyurethane coating compositions comprising:
1) the reaction product of:
   a) a polyol component, which is soluble or dispersible in water and is the reaction product of
      A1) 20 to 60 wt.% of a polyisocyanate component containing up to 100 wt.% of an aliphatic diisocyanate, preferably 50 to 100% of 4,4'-diisocyanatodicyclohexylmethane and 0 to 50 wt.% of other organic polyisocyanates having a molecular weight of 140 to 1500 g/mol,
      B1) 20 to 60 wt.% of a polyol component containing one or more polyether polyols and having an OH number of 25 to 350 mg KOH/g solids,
      C1) 2 to 12 wt.% of an anionic or potential anionic component containing one or more compounds having at least one isocyanate-reactive group and at least one group capable of salt formation, which may optionally be present in at least partially neutralized form,
      D1) 0 to 12 wt.% of a nonionic hydrophilic component containing one or more compounds which are mono- or difunctional for purposes of the isocyanate addition reaction and have at least one lateral or terminal hydrophilic polyether chain,
      E1) 0 to 15 wt.% of one or more polyhydric alcohols having 2 to 4 hydroxyl groups and a molecular weight of 62 to 250 g/mol,
      F1) 0 to 15 wt.% of one or more (cyclo)aliphatic polyamines having 2 to 4 amino groups and a molecular weight of 60 to 300 g/mol,
      G1) 0 to 30 wt.% of one or more (cyclo)aliphatic polyamino/hydroxyl compounds having a total of 2 to 4 hydroxyl and amino groups and a molecular weight of 61 to 300g/mol and
      H1) 0 to 15 wt.% of one or more stabilizing components which are mono- or difunctional for purposes of the isocyanate addition reaction and have 1 to 2 hydrazide groups and a molecular weight of 74 to 300 g/mol,
      wherein the percentages of A1) to H1) add up to 100 and
   b) a polyisocyanate component, which is soluble or dispersible in water, has blocked isocyanate groups and is the reaction product of
      A2) 40 to 80 wt.% of a polyisocyanate having an isocyanurate group content (calculated as C₃N₃O₃; molecular weight = 126) of 0 to 30 wt.% and prepared from one or more diisocyanates having a molecular weight of 140 to 350 g/mol with
      B2) 5 to 30 wt.% of one or more reversible blocking agents for isocyanate groups which are monofunctional for purposes of the isocyanate addition reaction,
      C2) 0 to 15 wt.% of an anionic or potential anionic component containing one or more compounds having at least one isocyanate-reactive group and at least one group capable of salt formation, which may optionally be present in at least partially neutralized form,
      D2) 5 to 30 wt.% of a nonionic hydrophilic component containing one or more compounds which are mono- or difunctional for purposes of the isocyanate addition reaction and have at least one lateral or terminal hydrophilic polyether chain,
      E2) 0 to 15 wt.% of one or more polyhydric alcohols having 2 to 4 hydroxyl groups and a molecular weight of 62 to 250 g/mol,
      F2) 0 to 15 wt.% of one or more (cyclo)aliphatic polyamines having 2 to 4 amino groups and a the molecular weight of 60 to 300 g/mol and
      G2) 0.5 to 15 wt.% of one or more stabilizing components which are mono- or difunctional for purposes of the isocyanate addition reaction and have 1 to 2 hydrazide groups and a molecular weight of 74 to 300 g/mol,
      wherein the percentages of A2) to G2) add up to 100, provided that the equivalent ratio of blocked isocyanate groups of component b) to hydroxyl groups of component a) is at least 0.05:1; and
2) an aqueous polyurethane dispersion prepared from at least one polycarbonate polyol.

Preferably, the aqueous coating composition comprises 5 to 95 wt.%, preferably 10 to 90 wt.%, more preferably 15 to 85 wt.% component a), 5 to 95 wt.%, preferably 10 to 90 wt.%, more preferably 15 to 85 wt.% component b), based on the total weight of components a) and b), with the total of components a) and b) being 100 wt.%.

Preferably, the aqueous coating composition comprises 1 to 99 wt.%, preferably 10 to 90 wt.%, more preferably 15 to 85 wt.%, more preferably 50 to 80 wt.% component 1) and 1 to 99 wt.%, preferably 10 to 90 wt.%, more preferably 15 to 85 wt.%, more preferably 20 to 50 wt.% component 2), , with the totals of 1) and 2) being 100 wt.% (based on solid polymer of the components 1 and 2).

In a preferred embodiment, the aqueous coating composition comprises 10 to 90 wt.% component 1) component a) and 10 to 90 wt.% component b), based on the total weight of components a) and b), with the total of components a) and b) being 100 wt.%; and comprises 15 to 85 wt.% component 1) and 15 to 85 wt.% component 2) based on solid polymer of components 1 and 2), with the totals of 1) and 2) being 100 wt. %.

In a preferred embodiment, the aqueous coating composition comprises 15 to 85 wt.% component 1) component a) and 15 to 85 wt.% component b), based on the total weight of components a) and b), with the total of components a) and b) being 100 wt.%; and comprises 50 to 80 wt.% component 1) and 20 to 50 wt.% component 2) based on solid polymer of components 1 and 2), with the totals of 1) and 2) being 100 wt. %.

Binder component a) comprises polyhydroxyl compounds which are the reaction product of components A1) - H1). Such polyhydroxyl components contain urethane and ether groups, are soluble or dispersible in water and have a number average molecular weight (which may be calculated from the hydroxyl group content and hydroxyl functionality) of 500 to 100,000, preferably of 1000 to 10,000 g/mol. Suitable polyhydroxy compounds include those known from polyurethane coating chemistry, provided that the polyhydroxyl compounds contain sufficient hydrophilic groups, in particular polyether chains containing ethylene oxide units and/or carboxylate groups, to ensure their solubility or dispersibility in water. It is also possible to use blends of polyhydroxyl compounds which are not sufficiently hydrophilic for this purpose in admixture with external emulsifiers.

Other aqueous polyhydroxyl dispersions known to those skilled in the art may be used in admixture with the dispersions which are the reaction products of components A1) - H1).

Starting component A1) is selected from organic polyisocyanates having a molecular weight of 140 to 1500 g/mol, preferably 168 to 318 g/mol, provided that 50 to 100, preferably 75 to 100 and more preferably 100 wt.% (based on the Component A1)) of the component A1) is an aliphatic or cycloaliphatic diisocyanate such as 4,4'-diisocyanatocyclohexylmethane (HMDI), hexamethylene diisocyanate (HDI), 1-methyl-2,4(2,6)-diisocyanatocyclohexane or 1-isocyanato-3,3,5-trimethyl-5-isocyanatomethyl-cyclohexane (IPDI) and mixtures thereof, preferably 4,4'-diisocyanatocyclohexylmethane (HMDI). In addition to the aliphatic or cycloaliphatic diisocyanate, component A1) may also contain other polyisocyanates such as 2,4- and/or 2,6-diisocyanatotoluene (TDI), 1-methyl-2,4- and/or -2,6-diisocyanatocyclohexane and 4,4'-diisocyanatodiphenylmethane (MDI), xylylene diisocyanate, tetramethylene diisocyanate, 1,4-diisocyantobutane, 1,12-diisocyanatododecane, 2,3,3-trimethylhexamethylene diisocyanate, 1,4-cyclohexylene diisocyanate, 4,4'-dicyclohexylmethane diisocyanate, 4,4'-dicyclohexyl diisocyanate, α,α,α',α'-tetramethyl-m- or p-xylylene diisocyanate, and triphenylmethane 4,4',4"-triisocyanate as well as mixtures thereof. Also suitable are monomeric triisocyanates such as 4-isocyanatomethyl-1,8-octamethylene diisocyanate. Polyisocyanate component A1) may also contain known lacquer polyisocyanates based on HDI, IPDI and/or HMDI, although this is less preferred.

In accordance with the present invention the polyisocyanate component may be in the form of a polyisocyanate adduct. Suitable polyisocyanate adducts are those containing isocyanurate, uretdione, biuret, iminooxadiazine dione, carbodiimide and/or oxadiazinetrione groups. The polyisocyanates adducts have an average functionality of 2 to 6, preferably 2 to 4, and an NCO content of 5 to 30% by weight, preferably 10 to 25% by weight and more preferably 15 to 25% by weight, and include:
1) Isocyanurate group-containing polyisocyanates which may be prepared as set forth in DE-PS 2,616,416, EP-OS 3,765, EP-OS 10,589, EP-OS 47,452, US-PS 4,288,586 and US-PS 4,324,879.
2) Uretdione diisocyanates which may be prepared by oligomerizing a portion of the isocyanate groups of a diisocyanate in the presence of a suitable catalyst, e.g., a trialkyl phosphine catalyst, and which may be used in admixture with other aliphatic and/or cycloaliphatic polyisocyanates, particularly the isocyanurate group-containing polyisocyanates set forth under (1) above.
3) Biuret group-containing polyisocyanates which may be prepared according to the processes disclosed in U.S. Patent Nos. 3,124,605; 3,358,010; 3,644,490; 3,862,973; 3,906,126; 3,903,127; 4,051,165; 4,147,714; or 4,220,749 by using co-reactants such as water, tertiary alcohols, primary and secondary monoamines, and primary and/or secondary diamines.
4) Iminooxadiazine dione and optionally isocyanurate group-containing polyisocyanates which may be prepared in the presence of special fluorine-containing catalysts as described in DE-A 19611849.
5) Carbodiimide group-containing polyisocyanates which may be prepared by oligomerizing di- or polyisocyanates in the presence of known carbodiimidization catalysts as described in DE-PS 1,092,007, US-PS 3,152,162 and DE-OS 2,504,400, 2,537,685 and 2,552,350.
6) Polyisocyanates containing oxadiazinetrione groups, e.g., the reaction product of two moles of a diisocyanate and one mole of carbon dioxide.

Preferred polyisocyanate adducts are those containing isocyanurate, uretdione, biuret, and/or iminooxadiazine dione groups, especially polyisocyanates containing isocyanurate groups and optionally uretdione or iminooxadiazine dione groups.

Component B1) is selected from relatively high molecular weight polyhydroxy polyethers having a number average molecular weight (which may be calculated from the hydroxyl group content and hydroxyl functionality) of 300 to 5000 g/mol, preferably 500 to 3000 g/mol, which are known from polyurethane chemistry. Examples include polymers or copolymers of tetrahydrofuran, styrene oxide, propylene oxide, ethylene oxide, butylene oxides or epichlorohydrin, in particular of propylene oxide and optionally ethylene oxide, which are produced from difunctional starter molecules, such as water, ethylene glycol, 1,2 propanediol, 1,3-propanediol, diethylene glycol, 1,4-butanediol, 1,5-pentanediol, 1,6-hexanediol, 1,8-octanediol, neopentyl glycol, 2-methyl-1,3-propanediol, the bis-hydroxymethylcyclohexane isomers, 2,2-bis-(4-hydroxyphenyl)propane and amines containing two NH bonds. Ethylene oxide may optionally be used, provided that the resulting polyetherdiol contains at most 10 wt.% of ethylene oxide units. The polyetherdiols used are preferably those obtained without using ethylene oxide, more preferably those obtained from propylene oxide and/or tetrahydrofuran.

In addition to these relatively high molecular weight difunctional compounds, component B1) may also contain trifunctional or higher functional polyhydroxyl compounds, preferably polyetherpolyols, which are obtained from higher functional starting materials such as trimethylolpropane, glycerol or ethylenediamine.

It is also possible, although less preferred, to use polyether polyamines obtained by converting the hydroxyl groups of the previously described polyether polyols into primary amino groups.

Component C1) is selected from compounds containing anionic or potential anionic groups and having at least one isocyanate-reactive group. These compounds are preferably carboxylic acids containing at least one, preferably one or two hydroxyl or amino groups, most preferably two hydroxyl groups, or salts of these amino- or hydroxycarboxylic acids. Suitable acids include 2,2-bis(hydroxymethyl)alkane-carboxylic acids (such as dimethylolacetic acid, 2,2-dimethylolpropionic acid, 2,2 dimethylolbutyric acid or 2,2-dimethylol-pentanoic acid), dihydroxysuccinic acid, hydroxypivalic acid and mixtures of these acids. Dimethylolpropionic acid and/or hydroxypivalic acid are preferably used as component C1). It is also possible, although less preferred, to use sulphonate diols which may optionally contain ether groups as described in US-P 4,108,814 (herein incorporated by reference) as anionic structural component C1).

The free acid groups, in particular carboxyl groups, are considered to be potential anionic groups, while the salt groups, in particular carboxylate groups, obtained by neutralization of the acids with bases are considered to be anionic groups.

Optional compounds D1) are selected from nonionic hydrophilic compounds containing one or two isocyanate-reactive groups, in particular hydroxyl or amino groups. At least 80 wt.% of the polyether chains present in these compounds are ethylene oxide units. Propylene oxide units may also be present. Suitable nonionic hydrophilic compounds include monofunctional polyethylene glycol monoalkyl ethers having number average molecular weights (which may be calculated from the hydroxyl group content and hydroxyl functionality) of 350 to 5000 g/mol such as Breox 350, 550 and 750 from BP Chemicals. Also suitable are the monofunctional compounds having one isocyanate-reactive group and hydrophilic chains containing ethylene oxide units as described, for example, in DE-A 2,651,506.

Diisocyanates and/or compounds containing two isocyanate-reactive groups, which also contain hydrophilic chains containing lateral ethylene oxide units, such as those described in DE-A 2,551,094, are also suitable for use as component D1).

Optional compounds E1) are selected from compounds having 2 to 4 hydroxyl groups and a molecular weight of 62 to 250 g/mol. Examples include ethylene glycol, propylene glycol, 1,4-butanediol, 1,6-hexanediol, glycerol, trimethylolpropane, trimethylolethane, hexanetriol isomers and pentaerythritol.

Optional compounds F1) are selected compounds having 2 to 4 amino groups and a molecular weight of 60 to 300 g/mol. Examples include ethylenediamine, 1,2-and 1,3-diaminopropane, 1,6-diaminohexane, 1,3-diamino-2,2-dimethyl-propane, isophoronediamine, 1,3- and 1,4-diamino-hexane, 4,4'-diaminodicyclohexylmethane, 2,4- and/or 2,6-diamino-1-methylcyclohexane, 4,4'-diamino-3,3'-dimethyldicyclohexyl-methane, 1,4-bis-(2-aminoprop-2-yl)cyclohexane, hydrazine, hydrazides and mixtures of diamines and/or hydrazines; higher functional polyamines such as diethylenetriamine, triethylenetetramine, dipropylenetriamine, tripropylene-tetramine and hydrogenated addition products of acrylonitrile onto aliphatic or cycloaliphatic diamines, preferably corresponding addition compounds of an acrylonitrile group onto a diamine, such as hexa-methylenepropylenetriamine, tetramethylenepropylenetriamine, isophorone-propylenetriamine, 1,4- or 1,3-cyclohexanepropylenetriamine and mixtures of these polyamines.

Optional compounds G1) are selected from compounds having a molecular weight of 61 to 300 g/mol and containing 2 to 4 amino groups and hydroxyl groups, such as ethanolamine, diethanolamine, triethanolamine and hydroxyethyl-ethylenediamine.

Optional compounds H1) are selected from mono- and/or difunctional carboxylic acid hydrazides having a molecular weight of 74 to 300, such as adipic acid dihydrazide, benzoic acid hydrazide, p-hydroxybenzoic acid hydrazide, isomeric terephthalic acid hydrazides, N-2,2,6,6-tetramethyl-4-piperidinyl-N-aminooxamide (Luchem HA-R 100, Elf Atochem), 3-(4-hydroxy-3,5-di-t.-butylphenyl)propionic acid hydrazide, 2-hydroxy-3-t.-butyl-5-methylphenylacetic acid hydrazide or mixtures of these compounds. Other effective hydrazides are addition products prepared from cyclic carbonates and hydrazine as are described in EP-A 654,490 and EP-A 682,051. Examples include the addition products of 1 mole of hydrazine and 1 mole of propylene carbonate and 1 mole of hydrazine and 2 moles of propylene carbonate. Preferred stabilizers are adipic acid dihydrazide and N-2,2,6,6-tetramethyl-4-piperidinyl-N-aminooxamide.

The OH-functional polyether polyurethanes a) are produced in known manner from starting components A1) to H1) in one or more stages. The amounts of the reactants are selected such that the equivalent ratio of isocyanate-reactive groups of components B1), C1), D1), E1), F1), G1) and H1) to isocyanate groups of component A1) is 0.8:1 to 2:1, preferably 0.95:1 to 1.5:1 and more preferably 0.95:1 to 1.2:1.

Neither the carboxyl groups of component C1), the water used to prepare the solutions or dispersions of the polyurethanes nor the neutralizing agent used to neutralize the carboxyl groups are included in the calculation of the equivalent ratio.

Component E1) is preferably used in an amount of 0 to 75 wt.%, more preferably of 0 to 70 wt.%, based on the weight of component B1).

Component D1) is preferably used in an amount such that 0 to 30, preferably 0 to 20 wt.% of ethylene oxide units are incorporated within terminally and/or laterally arranged polyether chains present in the polyurethanes ultimately obtained according to the invention.

The quantity of component C1) and the degree of neutralization of the carboxyl groups incorporated with component C1) are calculated such that 0.1 to 120, preferably 1 to 80 milliequivalents of carboxyl groups are present per 100 g of solids in the ultimately obtained polyurethane, provided that the total quantity of ethylene oxide units and carboxylate groups is sufficient to ensure the solubility or dispersibility of the polyurethanes in water.

The nature and quantity ratios of starting components A1) to H1) are also calculated such that the resulting polyurethanes contain a maximum of 15, preferably a maximum of 10 wt.% of unreacted hydroxyl groups, based on resin solids.

Starting components A1) to H1) may be reacted in one or more stages. A solvent, which is inert towards isocyanate groups, may also be used such that the reaction products are obtained in the form of a solution in such a solvent. In this connection, "solution" means both a true solution and a water-in-oil emulsion, which may occur, for example, if some of the structural components are used in the form of aqueous solutions. Suitable solvents include acetone, methyl ethyl ketone, N-methylpyrrolidone and mixtures of these and/or other solvents. These solvents are preferably present in an amount sufficient to provide at least 10 wt.% solutions of the reaction products prepared from starting components A1) to H1). These solvents may be distilled off to form dispersions free of solvent.

The OH-functional polyether polyurethanes a) may be produced in the absence or presence of catalysts. Suitable catalysts are known and include those conventionally used in polyurethane chemistry. Examples include tertiary amines such as triethylamine; and tin compounds such as tin(II) octoate, dibutyltin oxide and dibutyltin dilaurate.

Suitable processes for the production of the polyurethane polyurea dispersions or solutions according to the invention are known and include those described in D. Dieterich in Houben-Weyl, Methoden der organischen Chemie, 4th edition, volume E 20, page 1659 (1987), for example, the prepolymer process or the acetone process.

Hydroxyl groups may be introduced by reacting an NCO prepolymer with excess E1) or G1). If the process is performed in a solvent, these components may be added to the prepolymer. In a solvent-free melt process, in which at most small quantities of co solvents are used, the components may be added to the prepolymer only if OH-functional structural units are used. When components containing amino groups are used, they should be slowly added into the dispersion water or a proportion of the dispersion water, optionally in the presence of a co-solvent, in order to keep the exothermic reaction under control.

The base necessary for at least partially neutralizing the carboxyl groups may be added before, during or after the addition of water.

Suitable bases include ammonia, N-methylmorpholine, dimethylisopropanolamine, triethylamine, dimethylethanolamine, methyldiethanol-amine, triethanolamine, morpholine, tripropylamine, ethanolamine, triisopropanolamine, 2-diethylamino-2-methyl-1-propanol and mixtures of these and/or other neutralizing agents. Sodium hydroxide, lithium hydroxide and potassium hydroxide are also suitable, although less preferred, as neutralizing agents. Ammonia and dimethylethanolamine are preferred neutralizing agents.

The amount of water used is selected such that the resulting solutions or dispersions have a solids content of 5 to 90 wt.%, preferably 10 to 60 wt.%, preferably 20 to 45 wt.%. Once the water has been added, any co-solvent may optionally be removed by distillation. The polyurethanes according to the invention are ultimately obtained in the form of aqueous solutions or aqueous dispersions. Whether aqueous solutions or dispersions are obtained is primarily determined by the concentration of the hydrophilic segments.

It is possible in the process according to the invention to use larger quantities of tri- and polyfunctional structural components, in particular crosslinking components E1), F1) and/or G1), such that the polyurethanes obtained are highly branched instead of having a substantially linear structure. The aqueous solutions and dispersions a) are resistant to frost, stable in storage and may be infinitely diluted with water.

Crosslinking component b) is selected from blocked polyisocyanates which are soluble or dispersible in water and have a blocked isocyanate group content (calculated as NCO, molecular weight = 42) of 5 to 11 wt.%. Component b) may comprise a blocked polyisocyanate prepared from one starting polyisocyanate A2). Alternatively, component b) may comprise a mixture of polyisocyanates prepared from the polyisocyanates listed as suitable as component A2).

Starting component A2) is selected from organic polyisocyanates having an isocyanurate group content (calculated as C₃N₃O₃, molecular weight = 126) of 0 to 30 wt.%, preferably 2 to 30 wt.%, preferably of at least 5 wt.%, and prepared from diisocyanates having a molecular weight of 140 to 350. Diisocyanates which may be used include 4,4'-diisocyanatodicyclohexyl-methane (Desmodur W, Bayer AG), 1-isocyanato-3,3,5-trimethyl-5-isocyanatomethylcyclohexane (IPDI), 1,6-diisocyanatohexane (HDI) and mixtures of these polyisocyanates. Polyisocyanate component A2) is prepared from the diisocyanates using known methods, e.g., those described in Laas, H. J. et al. in J. prakt. Chem. 336 (1994) and EP-A 649,866.

In addition to the aliphatic or cycloaliphatic diisocyanate, component A2) may also contain other polyisocyanates such as 2,4- and/or 2,6-diisocyanatotoluene (TDI), 1-methyl-2,4- and/or -2,6-diisocyanatocyclohexane and 4,4'-diisocyanatodiphenylmethane (MDI), xylylene diisocyanate, tetramethylene diisocyanate, 1,4-diisocyantobutane, 1,12-diisocyanatododecane, 2,3,3-trimethylhexamethylene diisocyanate, 1,4-cyclohexylene diisocyanate, 4,4'-dicyclohexylmethane diisocyanate, 4,4'-dicyclohexyl diisocyanate, α,α,α',α'-tetramethyl-m- or p-xylylene diisocyanate, and triphenylmethane 4,4',4"-triisocyanate as well as mixtures thereof. Also suitable are monomeric triisocyanates such as 4-isocyanatomethyl-1,8-octamethylene diisocyanate. Polyisocyanate component A2) may also contain known lacquer polyisocyanates based on HDI, IPDI and/or HMDI, although this is less preferred.

Oximes, lactams, triazoles, diethyl malonate and/or pyrazoles and mixtures thereof are preferably used as the monofunctional blocking agents B2). Those skilled in the art can chose the right blocking agent to cure at lower or higher temperatures & cure cycle to attain the desired properties. Suitable blocking agents are disclosed in "Blocked isocyanates III Part A: Mechanism and Chemistry," Douglas A. Wicks and Zeno W. Wicks Jr., Progress in Organic Coatings 36 (1999) 148-172 and "Blocked isocyanates III Part B: Uses and applications of blocked isocyanates," Douglas A. Wicks and Zeno W. Wicks Jr., Progress in Organic Coatings 41 (2001) 1-83.

Component C2) is selected from compound containing anionic or potential anionic groups and having at least one isocyanate-reactive group. These compounds are preferably carboxylic acids containing at least one, preferably one or two hydroxyl groups, or salts of these hydroxycarboxylic acids. Suitable acids include 2,2-bis(hydroxymethyl)-alkanecarboxylic acids (such as dimethylolacetic acid, 2,2-dimethylol-propionic acid, 2,2 dimethylolbutyric acid or 2,2-dimethylolpentanoic acid), dihydroxysuccinic acid, hydroxypivalic acid and mixtures of these acids. Dimethylolpropionic acid and/or hydroxypivalic acid are preferably used as component C2).

The free acid groups, in particular carboxyl groups, are considered to be potential anionic groups, while the salt groups, in particular carboxylate groups, obtained by neutralization of the acids with bases are considered to be anionic groups.

Optional compounds D2) are selected from nonionic hydrophilic compounds containing one or two isocyanate-reactive groups, in particular hydroxyl or amino groups. At least 80 wt.%, preferably 100 wt.%, of the polyether chains present in these compounds are ethylene oxide units. Propylene oxide units may also be present. Suitable nonionic hydrophilic compounds include monofunctional polyethylene glycol monoalkyl ethers having number average molecular weights (which may be calculated from the hydroxyl group content and hydroxyl functionality) of 350 to 5000 g/mol, preferably 600 to 900 g/mol, such as Breox 350, 550 and 750 from BP Chemicals.

Optional compounds E2) are selected from compounds having 2 to 4 hydroxyl groups and a molecular weight of 62 to 250 g/mol. Examples include ethylene glycol, propylene glycol, 1,4-butanediol, 1,6-hexanediol, glycerol, trimethylolpropane, trimethylolethane, hexanetriol isomers, pentaerythritol and mixtures of these compounds.

Optional compounds F2) are selected compounds having 2 to 4 amino groups and a molecular weight of 60 to 300 g/mol. Examples include ethylenediamine, 1,2-and 1,3-diaminopropane, 1,6-diaminohexane, 1,3 diamino-2,2-dimethylpropane, 1-amino-3,3,5-trimethyl-5-amino-methylcyclohexane (IPDA), 1,3- and 1,4-diaminohexane, 4,4'-diaminodicyclohexylmethane, 2,4- and 2,6-diamino-1-methylcyclohexane, 4,4'-diamino-3,3'-dimethyldicyclohexylmethane, 1,4-bis-(2-aminoprop-2-yl)cyclohexane and mixtures of these compounds.

Component G2) is selected from mono- and/or difunctional carboxylic acid hydrazides having a molecular weight of 74 to 300 g/mol. Examples include adipic acid dihydrazide, benzoic acid hydrazide, p-hydroxybenzoic acid hydrazide, isomeric terephthalic acid hydrazides, N-2,2,6,6-tetramethyl-4-piperidinyl-N-aminooxamide (Luchem HA-R 100, Elf Atochem), 3-(4-hydroxy-3,5-di-t.-butylphenyl)propionic acid hydrazide, 2-hydroxy-3-t.-butyl-5-methylphenylacetic acid hydrazide and mixtures of these compounds. Other effective hydrazides are addition products prepared from cyclic carbonates and hydrazine, for example from 1 mole of hydrazine and 1 or two moles of propylene carbonate, as described in EP-A 654,490 and EP A 682,051. Preferred stabilizers are adipic acid hydrazide and N-2,2,6,6-tetramethyl-4-piperidinyl-N-aminooxamide.

Blocked polyisocyanate component b) is produced from starting components A2) to G2) in multiple stages. The amounts of the reactants are selected such that the equivalent ratio of isocyanate groups of component A2) to isocyanate-reactive groups of components B2), C2), D2), E2), F2) and G2) is 1:0.8 to 1:1.2, preferably 1:09 to 1:1. Neither the carboxyl groups of component C2), the water used to prepare the solutions or dispersions of the polyurethanes nor the neutralizing agent used to neutralize the carboxyl groups are included in the calculation of this equivalent ratio.

Component D2) is used in a quantity such that preferably 0.1 to 10, more preferably 0.5 to 3 wt.% of ethylene oxide units (calculated as C₂H₄O, molecular weight = 44) are incorporated within terminal and/or lateral polyether chains in the blocked polyisocyanates b) according to the invention.

The quantity of component C2) is calculated such that preferably 0.1 to 1.5, more preferably 0.5 to 0.7 wt.% of chemically incorporated carboxyl groups (calculated as COOH, molecular weight = 45) are present in blocked polyisocyanate b), provided that the total quantity of ethylene oxide units and carboxylate groups is sufficient to ensure the solubility or dispersibility of the blocked polyisocyanates in water.

Component G2) is present in an amount such that preferably 0.1 to 3.0, more preferably 0.1 to 1.0 wt.%, of chemically incorporated hydrazide groups (calculated as HN-NH, molecular weight = 30) are present in blocked polyisocyanates b).

In the first stage of the production process, hydrophilic components C2) and D2) are introduced into a vessel and reacted with polyisocyanate component A2) at a temperature of 80 to 100°C, preferably at 90°C, until the hydrophilic components are incorporated into the polyisocyanate. The reaction mixture is then cooled to 70°C and blocking agent B2) is incrementally added and reacted until the theoretically calculated NCO value is obtained. The temperature should not exceed 80°C during the reaction.

Chain extenders E2) and F2) and stabilizing component G2) may be incorporated before or during the dispersion operation. Components E2), F2) and G2) are preferably dissolved in water and the reaction mixture is dispersed in this solution with thorough stirring. The amount of water used is selected such that the resulting solutions or dispersions have a solids content of 5 to 90 wt.%, 20 to 50 wt.%, preferably 30 to 40 wt. %.

The base necessary for at least partially neutralizing the carboxyl groups may be added before, during or after the dispersion stage. Suitable bases include ammonia, N-methylmorpholine, dimethylisopropanolamine, triethylamine, dimethylethanolamine, methyldiethanolamine, triethanolamine, morpholine, tripropylamine, triisopropanolamine, 2-diethylamino-2-methyl-1-propanol and mixtures of these and/or other neutralizing agents. Sodium hydroxide, lithium hydroxide Na₂CO₃, NaHCO₃ and potassium hydroxide are also suitable, although less preferred, as neutralizing agents. Dimethylethanolamine is the preferred neutralizing agent.

Components a) and b) are utilized in amounts such that the equivalent ratio of blocked isocyanate groups of component b) to hydroxyl groups of component a) is at least 0.05:1, preferably between 0.5:1 to 20:1, more preferably between 1:1 and 10:1.

Component 2) of the coating composition is an aqueous polyurethane dispersion prepared from at least one polycarbonate polyol as alcohol component. Preferably, the polyurethane dispersion is non-functional. By "non-functional" it is meant the polyurethane dispersion contains substantially no unreacted isocyanate or isocyanate-reactive groups. In other words, if the polyurethane is non-functional, it does not chemically react with components a) and/or b) of the coating composition.

The aqueous polyurethane dispersion may be prepared from polycarbonate polyols and (cyclo)aliphatic di- and/or polyisocyanates. Other materials may be used in their preparation, and such components are known to those skilled in the art, such aliphatic (di)alcohols, (di)amines, polyethers, polyetheramines and the like.

Suitable polycarbonates include those having a number average molecular weight range 500 to 6000g/mol and comprising recurring units each independently represented by the following formula (1),

-O-R-O-C(=O)- (1),

wherein R represents substituted or unsubstituted, linear or branched, alkylene having 2 to 30 carbon atoms or substituted or unsubstituted arylalkylene having 6 to 30 carbon atoms or substituted or unsubstituted heteroarylalkylene having 6 to 30 carbon atoms or substituted or unsubstituted cyclylalkylene having 6 to 30 carbon atoms or substituted or unsubstituted heterocyclylalkylene having 6 to 30 carbon atoms, and terminal hydroxyl groups.

Suitable alkylene groups, preferably C₃₋₁₆-alkylene groups, include -(CH₂)₃-, - (CH₂)₄-,-(CH₂)₅-, -(CH₂)₆-, -(CH₂)₇-, -(CH₂)₈-, -(CH₂)₉-, -(CH₂)₁₀-, -(CH₂)₁₁-, - (CH₂)₁₂-, -(CH₂)₁₃-, -(CH₂)₁₄-, -(CH₂)₁₅-, -(CH₂)₁₆-.

Alkylene group R in formula (1) represents preferably linear or branched alkylene having 3 to 16 carbon atoms. More preferably R represents linear or branched alkylene having 4 to 12 carbon atoms. Particularly preferred are -(CH₂)₄-, -(CH₂)₅₋, -(CH₂)₂-(CHCH₃)-(CH₂)₂-, and/or -(CH₂)₆-.

Suitable arylalkylene, heteroarylalkylene, cyclylalkylene and heterocyclylalkylene groups include those isomers according to formulae (2) as depicted below:

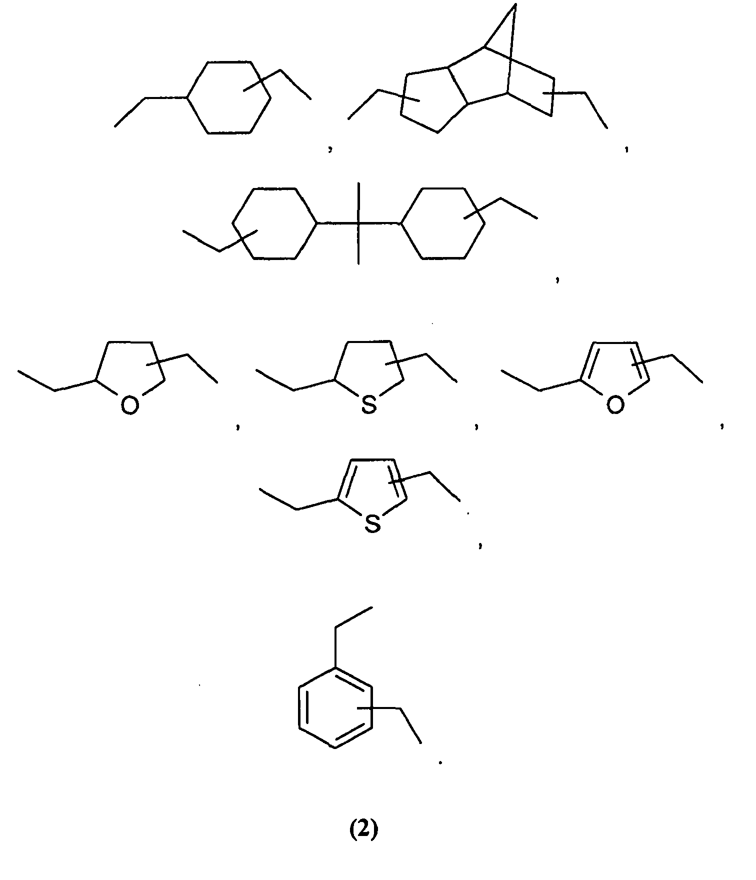

"Cyclyl" means a non-aromatic mono-or multicyclic ring system comprising about 3 to about 12 carbon atoms, preferably about 5 to about 10 carbon atoms. Preferred cycloalkyl rings contain about 5 to about 7 ring atoms. The cycloalkyl can be optionally substituted with one or more "ring system substituents" which may be the same or different, and are as defined herein. Non-limiting examples of suitable monocyclic cycloalkyls include cyclopropyl, cyclopentyl, cyclohexyl, cycloheptyl and the like. Non-limiting examples of suitable multicyclic cycloalkyls include 1-decalinyl, norbomyl, adamantyl and the like, as well as partially saturated species such as, for example, indanyl, tetrahydronaphthyl and the like.

"Aryl" means an aromatic monocyclic or multicyclic ring system comprising about 6 to about 14 carbon atoms, preferably about 6 to about 10 carbon atoms. The aryl group can be optionally substituted with one or more "ring system substituents" which may be the same or different, and are as defined herein. Non-limiting examples of suitable aryl groups include phenyl and naphthyl.

"Arylalkyl" means an aryl group, as defined above, that is bound to an alkyl group.

"Heteroaryl" means an aromatic monocyclic or multicyclic ring system comprising about 5 to about 14 ring atoms, preferably about 5 to about 10 ring atoms, in which one or more of the ring atoms is an element other than carbon, for example oxygen or sulfur, alone or in combination. Preferred heteroaryls contain about 5 to about 6 ring atoms. The "heteroaryl" can be optionally substituted by one or more "ring system substituents" which may be the same or different, and are as defined herein. The prefix oxa or thia before the heteroaryl root name means that at least an oxygen or sulfur atom respectively, is present as a ring atom. "Heteroaryl" may also include a heteroaryl as defined above fused to an aryl as defined above. Non-limiting examples of suitable heteroaryls include furanyl, thienyl, benzofuranyl, benzothienyl.

"Heterocyclyl" means a non-aromatic saturated monocyclic or multicyclic ring system comprising about 3 to about 10 ring atoms, preferably about 5 to about 10 ring atoms, in which one or more of the atoms in the ring system is an element other than carbon, for example oxygen or sulfur, alone or in combination. There are no adjacent oxygen and/or sulfur atoms present in the ring system. Preferred heterocyclyls contain about 5 to about 6 ring atoms. The prefix oxa or thia before the heterocyclyl root name means that at least a nitrogen, oxygen or sulfur atom respectively is present as a ring atom. The heterocyclyl can be optionally substituted by one or more "ring system substituents" which may be the same or different, and are as defined herein. Sulfur atom of the heterocyclyl can be optionally oxidized to the corresponding S-oxide or S,S-dioxide. Non-limiting examples of suitable monocyclic heterocyclyl rings include 1,4-dioxanyl, tetrahydrofuranyl, tetrahydrothiophenyl, lactone, and the like.

"Heteroarylalkylene" means a heteroaryl group, as defined above, that is bound to an alkylene group or is part of an alkylene group, as defined above, wherein said alkylene group is bound to the rest of the molecule.

"Cyclylalkylene" means a cyclyl group, as defined above, that is bound to an alkylene group or is part of an alkylene group, as defined above, wherein said alkylene group is bound to the rest of the molecule.

"Arylalkylene" means an aryl group, as defined above, that is bound to an alkylene group or is part of an alkylene group, as defined above, wherein said alkylene group is bound to the rest of the molecule.

"Heterocyclylalkylene" means a heterocyclyl group, as defined above, that is bound to an alkylene group or is part of an alkylene group, as defined above, wherein said alkylene group is bound to the rest of the molecule.

"Ring system substituent" means a substituent attached to an aromatic or non-aromatic ring system which, for example, replaces available hydrogen on the ring system. Ring system substituents may be the same or different, each being independently selected from the group consisting of alkyl, alkenyl, alkynyl, aryl, heteroaryl, aralkyl, alkylaryl, heteroaralkyl, heteroarylalkenyl, heteroarylalkynyl, alkylheteroaryl, hydroxy, hydroxyalkyl, alkoxy, aryloxy, aralkoxy, acyl, aroyl, halo, nitro, cyano, carboxy, alkoxycarbonyl, aryloxycarbonyl, aralkoxycarbonyl, alkylsulfonyl, arylsulfonyl, heteroarylsulfonyl, alkylthio, arylthio, heteroarylthio, aralkylthio, heteroaralkylthio, cycloalkyl, heterocyclyl, and SO₂Y₁Y₂, wherein Y₁ and Y₂ can be the same or different and are independently selected from the group consisting of hydrogen, alkyl, aryl, cycloalkyl, and aralkyl. "Ring system substituent" may also mean a single moiety which simultaneously replaces two available hydrogens on two adjacent carbon atoms (one H on each carbon) on a ring system. Examples of such moiety are methylene dioxy, ethylenedioxy, and-C(CH₃)₂-.

"Ring system substituent" also includes substituents off of an heterocyclyl ring, wherein said substituents on adjacent carbon atoms, on a carbon atom and an adjacent heteroatom, or on a single carbon atom, together with the carbon atom(s) and/or the combination of the carbon atom and the adjacent heteroatom to which said substituents are attached, form a four to seven-membered cycloalkyl, cycloalkenyl, heterocyclyl, aryl or heteroaryl ring.

The following are suitable as preferred polyols: ethylene glycol, 1,4-butanediol, 1,5-pentanediol, 3-methyl-1,5-pentandiol, 1,6-hexanediol, neopentyl glycol, propylene glycol, 1,3-propanediol, 1,4-cyclohexanedimethanol and mixtures thereof. 1,4-Butanediol is preferably used.

The polycarbonate polyols may be made with a branched structure by the use of tri- and multifunctional hydroxyl compounds such as glycerol, trimethylolpropane, trimethylolethane, hexanetriol isomers, pentaerythritol and mixtures of these compounds. If a branched structure is desired, trimethylolpropane is preferably used.

The polycarbonate diol amount based on the weight amount of the alcohols used in the preparation of component 2 is from 10 wt.% to 100 wt.%, preferably from 50 wt.% to 100 wt.% and more preferably from 70 wt.% to 100 wt.%.

Suitable (cyclo)aliphatic isocyanates are, for example, isocyanates such as, for example, hexamethylene diisocyanate, butane diisocyanate, isophorone diisocyanate, 1-methyl-2,4(2,6)-diisocyanato cyclohexane, norbomane diisocyanate, tetramethylxylylene diisocyanate, hexahydroxylylene diisocyanate, 4,4'-diisocyanatodicyclohexylmethane and mixtures thereof. Also suitable are monomeric triisocyanates such as 4-isocyanatomethyl-1,8-octamethylene diisocyanate.

Preferably, 4,4'-diisocyanatodicyclohexylmethane and/or isophorone diisocyanate and/or hexamethylene diisocyanate and/or 1-methyl-2,4(2,6)-diisocyanatocyclohexane are used.

In accordance with the present invention, polyisocyanate adduct may be used in the production of the aqueous polyurethane dispersion. Suitable polyisocyanate adducts are those containing isocyanurate, uretdione, biuret, iminooxadiazine dione, carbodiimide and/or oxadiazinetrione groups. The polyisocyanates adducts have an average functionality of 2 to 6, preferably 2 to 4, and an NCO content of 5 to 30% by weight, preferably 10 to 25% by weight and more preferably 15 to 25% by weight, and include:
1) Isocyanurate group-containing polyisocyanates which may be prepared as set forth in DE-PS 2,616,416, EP-OS 3,765, EP-OS 10,589, EP-OS 47,452, US-PS 4,288,586 and US-PS 4,324,879.
2) Uretdione diisocyanates which may be prepared by oligomerizing a portion of the isocyanate groups of a diisocyanate in the presence of a suitable catalyst, e.g., a trialkyl phosphine catalyst, and which may be used in admixture with other aliphatic and/or cycloaliphatic polyisocyanates, particularly the isocyanurate group-containing polyisocyanates set forth under (1) above.
3) Biuret group-containing polyisocyanates which may be prepared according to the processes disclosed in U.S. Patent Nos. 3,124,605; 3,358,010; 3,644,490; 3,862,973; 3,906,126; 3,903,127; 4,051,165; 4,147,714; or 4,220,749 by using co-reactants such as water, tertiary alcohols, primary and secondary monoamines, and primary and/or secondary diamines.
4) Iminooxadiazine dione and optionally isocyanurate group-containing polyisocyanates which may be prepared in the presence of special fluorine-containing catalysts as described in DE-A 19611849.
5) Carbodiimide group-containing polyisocyanates which may be prepared by oligomerizing di- or polyisocyanates in the presence of known carbodiimidization catalysts as described in DE-PS 1,092,007, US-PS 3,152,162 and DE-OS 2,504,400, 2,537,685 and 2,552,350.
6) Polyisocyanates containing oxadiazinetrione groups, e.g., the reaction product of two moles of a diisocyanate and one mole of carbon dioxide.

Preferred polyisocyanate adducts are those containing isocyanurate, uretdione, biuret, and/or iminooxadiazine dione groups, especially polyisocyanates containing isocyanurate groups and optionally uretdione or iminooxadiazine dione groups.

In addition to the aliphatic or cycloaliphatic diisocyanate, they may also contain other polyisocyanates such as 2,4- and/or 2,6-diisocyanatotoluene (TDI), 1-methyl-2,4- and/or -2,6-diisocyanatocyclohexane and 4,4'-diisocyanatodiphenylmethane (MDI), xylylene diisocyanate, tetramethylene diisocyanate, 1,4-diisocyantobutane, 1,12-diisocyanatododecane, 2,3,3-trimethylhexamethylene diisocyanate, 1,4-cyclohexylene diisocyanate, 4,4'-dicyclohexylmethane diisocyanate, 4,4'-dicyclohexyl diisocyanate, α,α,α',α'-tetramethyl-m- or p-xylylene diisocyanate, and triphenylmethane 4,4',4"-triisocyanate as well as mixtures thereof. Also suitable are monomeric triisocyanates such as 4-isocyanatomethyl-1,8-octamethylene diisocyanate. Polyisocyanate component may also contain known lacquer polyisocyanates based on HDI, IPDI and/or HMDI, although this is less preferred.

Other components such as chain extenders, chain terminators or hydrophilicizing agents may be used in the preparation of the aqueous, non-functional polyurethane dispersion, and such components are well known to those skilled in the art.

The aqueous, non-functional polyurethane dispersion can be prepared using the prior art acetone method or modifications thereof. A summary of these methods is given in Methoden der organischen Chemie (Houben-Weyl, Additional and Supplementary Volumes to the 4th Edition, Volume E20, H. Bartl and J. Falbe, Stuttgart, New York, Thieme 1987, pp. 1671-1682). The acetone method is preferred.

In a first stage a prepolymer containing isocyanate groups is synthesized from the polycarbonate polyol, the diisocyanate and potentially other diols. One or more diisocyanates can be used, as well as other polyols such as polyesters, polyethers, polycaprolactones or the mixtures thereof may also be used. Also, hydroxyl-functional solubilizing agents known in the art can be used during this stage.

In a second stage the prepolymer is dissolved in an organic, at least partially water-miscible solvent, containing no isocyanate-reactive groups. The preferred solvent is acetone. Other solvents, such as, for example, 2-butanone, tetrahydrofuran or dioxan or mixtures of these solvents can also be used, however.

In a third stage the isocyanate-containing prepolymer solution is reacted with mixtures of amino-functional chain extenders and, optionally, chain terminator, to form the polyurethane. Preferably, one of the amino-functional chain extenders should be a solubilizing agent containing sulfonated or carboxylated groups. These groups are either already pre-neutralized or can be neutralized with tertiary amines to form a salt.

In a fourth stage the high-molecular weight polyurethane is dispersed in the form of a fine-particle dispersion by addition of water to the solution or solution to the water.

In a fifth stage the organic solvent is partially or wholly removed by distillation, optionally under reduced pressure. The residual amount of solvent is <5% by weight, preferably < 2% by weight and more preferably < 1% by weight.

The aqueous, non-functional polyurethane dispersion is characterized by at least one glass transition temperature, Tg, of between -70°C and 0°C, preferably between -40°C and -20°C as measured by ASTM E2602-09 at a heating rate of 20° C per minute. It is also characterized by a solids content of 2 to 70 wt.%, preferably 30 to 55 wt.%, more preferably 35 to 50 wt.%. The dispersion has a viscosity @ 25°C of between 50 and 1000 mPa·s at a concentration of 40 wt.% as measured by ASTM D2196-05. Films formed from the aqueous, non-functional polyurethane dispersion alone are characterized by a tensile strength of 1 to 100 MPa, preferably between 20 and 60 MPa, an elongation at break of 50 to 1000%, preferably 200 to 600%, and a 100% modulus of 3 to 10 MPa, preferably 5 to 8 MPa.

The coating compositions according to the invention are produced by blending polyol component a), which is soluble or dispersible in water, with the blocked polyisocyanate component b), and which is soluble or dispersible in water, along with the aqueous, non-functional polyurethane dispersion in known manner. It is possible to mix aqueous dispersions of components a) and b) or to mix components a) and b) in anhydrous form and then to disperse them together prior to mixing with the aqueous, non-functional polyurethane dispersion. Of course, the coating compositions may be prepared with or without the use of co-solvents.

The coating formulation may optionally contain adhesion promoters such as those disclosed in U.S. Patent No. 6, 403,175, the entire contents of which are hereby incorporated by reference, in particular, col. 3, line 60 to col. 6, line 8. Preferred adhesion promoters include γ-mercaptopropyltrimethoxysilane, 3-aminopropyltriethoxysilane, 3-aminopropylsilane hydrolysate, 3-glycidyloxypropyltriethoxysilane and mixtures thereof.

The application of the coating compositions of the invention to the material to be coated takes place with the methods known and customary in coatings technology, such as spraying, knife coating, curtain coating, vacuum coating, rolling, pouring, dipping, spin coating, squeegeeing, brushing or squirting or by means of printing techniques such as screen, gravure, flexographic or offset printing and also by means of transfer methods.

Along with glass suitable substrates are, for example, wood, metal, including in particular metal as used in the applications of wire enamelling, coil coating, can coating or container coating, and also plastic, including plastic in the form of films, especially ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM, and UP (abbreviations according to DIN 7728T1), paper, leather, textiles, felt, glass, wood, wood materials, cork, inorganically bonded substrates such as wooden boards and fiber cement slabs, electronic assemblies or mineral substrates. It is also possible to coat substrates consisting of a variety of the abovementioned materials, or to coat already coated substrates such as vehicles, aircraft or boats and also parts thereof, especially vehicle bodies or parts for exterior mounting. It is also possible to apply the coating compositions to a substrate temporarily, then to cure them partly or fully and optionally to detach them again, in order to produce films, for example.

The coating compositions are especially suitable for glass substrates, in particular flat glass, glass panels and glass containers such as jars or bottles. The coating compositions provide the caustic resistance necessary for use on refillable glass bottles. Further, the coatings provide scuff resistance and durability which is required, especially during the bottle filling operations. They also impart the lubricity control and UV stability necessary for glass bottles. The coated bottles also have good hand feel. The coatings can be applied with or without hot end coating, with or without cold end coating or both; and with or without a silane pretreatment of the glass.

The coating compositions of the present invention provide design freedom to manufacture transparent, pigmented, and high gloss, matte, and frosted looks on glass bottles. Suitable representative pigments include rutile and anatase titanium dioxide, yellow and red iron oxides, green and blue copper phthalocyanine, carbon blacks, leafing and nonleafing aluminum, barium sulfate, calcium carbonate, sodium silicate, magnesium silicate, zinc oxide, antimony oxide, di- and monoarylide yellows, nickel arylide yellow, benzimidazolone oranges, naphthol and quinacridone reds, pearlescent pigments (mica platelets), bronze, nickel, and stainless steel platelets, micronized matting agents such as, methylenediaminomethylether-polycondensate and pigment paste thereof,

The coating compositions can be applied over a label (e.g. pressure-sensitive labels, UV-activated labels, heat transfer labels, etc.) or a decorative inorganic or organic coating or mixtures thereof which has previously been applied to the glass bottle. Suitable decorative organic coatings include EcoBrite Organic Ink (PPG Industries, Inc., Pittsburgh, PA) and SpecTruLite (Ferro Corporation, Cleveland, Ohio).

In one embodiment of the invention, a primer treatment may be applied to the glass bottle prior to application of the coating composition.

The primer treatment may be any coating that provides lubrication to protect the glass containers between the time of manufacture and the time of application of the protective organic coating and improves the adhesion of the protective coating to the glass container. In particular embodiments, the primer treatment comprises both a hot end coating and a cold end coating. In other particular embodiments, the glass containers do not have a hot end coating, such that the primer treatment comprises a cold end coating applied only after the containers have been substantially cooled in the annealing lehr.

In a particular embodiment, the primer treatment comprises a cold end coating, the cold end coating comprising a diluted silane composition or mixture of a silane composition and a surface-treatment composition. Any silane composition suitable for use as a primer on a glass container may be used in the primer coating of the present invention, non-limiting examples of which include monoalkoxysilanes, dialkoxysilanes, trialkoxysilanes, and tetralkoxysilanes. The surface-treatment composition may comprise polyethylene or stearate compositions or mixtures thereof, which do not require removal prior to the addition of further coatings to the glass containers. Stearates, as used herein, comprise the salts and esters of stearic acid (octadecanoic acid). In a particular embodiment, the stearate comprises a T5 stearate coating (Tegoglas, Philadelphia, Pa.). Those of ordinary skill in the art will appreciate that the primer coating may be in the form of an aqueous solution (homogenous or colloidal) or an emulsion. The surface-treatment composition may comprise polyethylene emulsion (Duracote from Sun Chemical). The primer treatment also may comprise additional compositions to improve the coating, non-limiting examples of which include surfactants and lubricants.

In another particular embodiment, the primer treatment may comprise both a hot end coating and a cold end coating, the hot end coating comprising a composition suitable for adhesion to the glass containers (e.g., tin oxide) and the cold end coating comprising a polyethylene or stearate composition as described hereinabove. However, those of ordinary skill in the art should recognize that there are instances where such hot end coatings are not necessary in the embodiments provided herein.

In another embodiment of the invention, the coating composition of the present invention may be applied to the glass bottles without the use of a primer treatment.

The coating composition may be dried and/or cured by any suitable means known to those skilled in the art, such as air drying, thermal curing and accelerated drying by exposure to radiation, such as electromagnetic radiation, such as radio waves (RF), microwaves and infrared (IR) radiation and/or combinations thereof.

In another embodiment of the invention, the coating composition of the present invention can act as the primer as well as the topcoat and provide the necessary lubricity required for bottle line processing.

In the following examples all parts and percentages are weight percentages, unless otherwise indicated.

### EXAMPLES

Materials used in the Examples:
Impranil^{®} DLC-F (anionic dispersion of an aliphatic polycarbonate urethane resin in water, Bayer MaterialScience LLC, Pittsburgh, PA.
Bayhydrol^{®} XP 2637 (solvent-free, anionic dispersion of an aliphatic polycarbonate urethane resin in water, Bayer MaterialScience LLC, Pittsburgh, PA).
Bayhydrol^{®} A XP 2695 (aqueous hydroxyfunctional polyacrylic dispersion, equivalent weight in supply form -829 g/mol; Bayer MaterialScience LLC, Pittsburgh, PA)
Cymel^{®} 327 (methylated high NH melamine resin; M/F/Me∼1/4.1/3.1; Cytec Surface Specialties Inc, Smyrna GA)
Bayhydur^{®} BL XP 2669 (hydrophilized, blocked aliphatic polyisocyanate based on IPDI, NCO content, blocked∼3.3%; Bayer MaterialScience LLC, Pittsburgh, PA)
Bayhydur^{®} TP LS 2310 (hydrophilized, blocked aliphatic polyisocyanate based on HDI, NCO content, blocked∼3.7%; Bayer MaterialScience LLC, Pittsburgh, PA)
Silquest^{®} A-189 (γ-mercaptopropyltrimethoxysilane, Momentive Performance Materials, Albany, NY)
Dynasylan^{®} AMEO (3-Aminopropyltriethoxysilane, Evonik Corporation, Parsippany, NJ)
Colormatch® 50-94199 (Red Pigment Paste from Plasticolors, Inc., Ashtabula OH, USA).
Colormatch® 50-9410 (Black Pigment Paste from Plasticolors, Inc., Ashtabula OH, USA).
Colormatch® EXP-94200 (Metallic Pigment Paste from Plasticolors, Inc., Ashtabula OH, USA).

### Example 1

A hydroxyl-functional polyurethane dispersion was prepared in accordance with Example 1 of U.S. Patent No. 5,852,106.

### Example 2

A blocked polyisocyanate was prepared in accordance with Example 2 of U.S. Patent No. 5,852,106.

### Formulation details:

The formulations of Examples A-J were prepared by mixing the polyisocyanate, polyol, polyurethane dispersion followed by addition of silanes and dipropylene glycol. The mixture was then agitated using a mechanical mixer, de-aerated and stored overnight before use.

As used herein, parts means parts by weight. The NCO/OH ratio was calculated based on the blocked polyisocyanate component and polyol component. The additive packages for all the formulations were kept constant.

Example A (Comparison): Formulation was prepared as follows.

37.0 parts of the dispersion of Example 1 and 61.0 parts of the blocked polyisocyanate of Example 2 were mixed together, and then 1.6 parts of dipropylene glycol, 0.2 parts of Silquest A-189 Silane and 0.2 parts of Dynaslan AMEO were added with continued stirring. The formulation was mixed under agitation using a mechanical mixer until a homogeneous mixture was obtained. This water-based formulation prepared was kept overnight to de-aerate.

Examples B-J were prepared utilizing the procedure set forth for Comparative Example A, utilizing the materials and amounts set forth in the Table below.

### Application details:

Coatings for direct and reverse impact tests were prepared by applying the formulations onto Bonderite B1000 cold rolled steel panels using a Number 50 wire wound rod.

Coatings for Taber test were prepared by applying the formulations onto the airside of 4"x4" glass Taber panels using a Number 50 wire wound rod.

Coatings for Fischer Microindenter evaluated were prepared by applying 80 µL of formulations onto glass disks using an Eppendorf pipettor and spread over the disks using the tip of the disposable tip. For this particular test the formulation was air-dried for two hours before the oven cure.

### Cure details:

The coatings were cured at 170°C for 30 min in an oven.
Several of the Examples were repeated using alternate curing conditions, such as 150°C for 30 min, 150°C for 45 min, 160°C for 30 min, 160°C for 45 min, 170°C for 30 min, 170°C for 45 min. In all cases, the cure conditions did not affect the properties of the cured coating. Those skilled in the art can go to lower cure temperatures by using different de-blocking agents and the right catalyst selection and also go to higher cure temperatures with lower cure time.

### Testing details:

All the tests were performed 24 hours after the coatings were cured.

The caustic test was performed at 80 °C for 3 hours in a 2.5% sodium hydroxide bath.

Microindenter readings (Marten's hardness) were done using Fischerscope H100C instrument on glass disks.

Film thickness of the coatings was performed using Fischerscope MMS Instrument according to ASTM D 1186-93. They were in the range of 0.5 to 0.75 mils.

Direct and reverse impact test of the coatings were performed according to ASTM D 2794.

Film loss of the coatings was performed by using Taber Abrasion according to ASTM 4060-95. The panels were weighed before and after abrasion using 500 g of weight on each side of the holders for 20 cycles. The weight difference before and after abrasion was recorded as film loss.

Scribe adhesion was done on the glass taber panels after the films have been cured. Two one inch long scribes diagonal to each other were cut using a utility knife and the adhesion of the film to glass was inspected visually. If no film peeled from the substrate, the coating was marked as "pass."

### Coatings Properties:

Comparison Example A shows the glass coating formulation with an NCO:OH ratio of 1.04:1. Addition of the non-functional polycarbonate based PUD (Impranil^{®} DLC-F in Example B and Bayhydrol^{®} XP 2637 in Example C) resulted in significant improvement in flexibility (as shown by reduction in microhardness) without any loss in adhesion or toughness. These properties are extremely important in the glass bottle manufacturing operation where the bottles undergo significant scuffing when they move in the line and when they experience line pressure. The coating needs to withstand and absorb these impact pressures with very minimum surface marring, retain outstanding optical clarity and then recover quickly after caustic exposure.

Examples D, E & F show that as the amount of Bayhydrol^{®} XP 2637 was increased in the formulation, the film had improved flexibility (shown by decrease in microhardness) while still maintaining good adhesion, toughness and caustic resistance.

The use of Bayhydrol^{®} XP 2637 also widened the formulating latitude from low NCO:OH ratio to high NCO:OH ratio without any loss in coatings performance properties. Examples G, H & I demonstrate the use of formulations with a wide range namely NCO:OH ratios of 0.2:1 and 20:1. Example L shows a formulation with mixed polyols and mixed blocked polyisocyanates. This formulation resulted in coating with higher hardness as shown by Fischer Microindenter reading. Addition of Bayhydrol^{®} XP 2637 to this formulation (example M) helped to improve the flexibility without loss in other properties.
The use of an additional crosslinker like melamine along with the NCO & OH reaction to provide secondary crosslinking is known in the industry. This traditional way of using melamine as a secondary crosslinker to improve hardness & caustic resistance did not yield the same coatings performance as the Bayhydrol^{®} XP 2637. Comparing examples J, I & K which all have similar NCO:OH ratios of 0.2:1 the addition of melamine (Cymel 327) introduced more brittleness leading to lower impact strength. Similar type of result was observed with another set of examples L, M & O which all had an NCO:OH ratio of 1.04:1, where even the formulation with lower melamine content resulted in poor impact strength. A control formulation with Bayhydrol^{®} XP 2637is shown as reference in example P.

**Table 1**

| Raw Materials (actual weight, g) | A (comp) | B | C | D | E | F | G | H | I |
|---|---|---|---|---|---|---|---|---|---|
| Dispersion of Ex. 1 | 37 | 31.74 | 31.74 | 27.79 | 24.71 | 22.25 | 4.38 | 1.5 | 59.57 |
| Bayhydrol A XP 2695 | | | | | | | | | |
| Bayhydrol XP 2637 | | | 13.94 | 24.4 | 32.55 | 39.08 | 24.4 | 50 | 19.6 |
| Polyisocyanate of Ex. 2 | 61 | 52.32 | 52.32 | 45.81 | 40.74 | 36.67 | 69.22 | 46.5 | 18.83 |
| Cymel 327 | | | | | | | | | |
| Bayhydur BL XP 2669 | | | | | | | | | |
| Bayhydur TP LS 2310 | | | | | | | | | |
| Impranil DLC-F | | 13.94 | | | | | | | |
| Dipropylene glycol | 1.6 | 1.6 | 1.6 | 1.6 | 1.6 | 1.6 | 1.6 | 1.6 | 1.6 |
| Silquest A-189 Silane | 0.2 | 0.2 | 0.2 | 0.2 | 0.2 | 0.2 | 0.2 | 0.2 | 0.2 |
| Dynasylan AMEO | 0.2 | 0.2 | 0.2 | 0.2 | 0.2 | 0.2 | 0.2 | 0.2 | 0.2 |
| Formulation Results | | | | | | | | | |
| NCO:OH | 1.04 | 1.04 | 1.04 | 1.04 | 1.04 | 1.04 | 9.99 | 19.61 | 0.2 |
| Coating Properties | | | | | | | | | |
| FISHER AFT (mils) | 0.56 | 0.42 | 0.47 | 0.59 | 0.72 | 0.54 | 0.54 | 0.42 | 0.54 |
| DIRECT (in-lbs) | 160 | 160 | 160 | 160 | 160 | 160 | 160 | 160 | 160 |
| REVERSE (in-lbs) | 160 | 160 | 160 | 160 | 160 | 160 | 160 | 160 | 160 |
| Fischer Microhardness (N/mm²) | 103 | 64 | 65 | 42 | 34 | 28 | 31 | 14 | 43 |
| Before Caustic Adhesion (scribe) | pass | Pass | pass | pass | pass | pass | Pass | pass | pass |
| After Caustic Adhesion (scribe) | pass | Pass | pass | pass | pass | pass | Pass | pass | pass |
| After Caustic Film Loss (mg) | 13.6 | 17.2 | 15.0 | 12.6 | 10.1 | 9.4 | 19.9 | 9.8 | 16.6 |

**Table 2**

| Raw Materials (actual weight, g) | J (comp) | K (comp) | L (comp) | M | O (comp) | P (comp) | Q | R | S |
|---|---|---|---|---|---|---|---|---|---|
| Dispersion of Ex. 1 | 74.46 | 40.46 | 17.35 | 15.58 | 16.46 | | 36.0 | 14.4 | 1.14 |
| Bayhydrol A XP 2695 | | | 17.35 | 15.58 | 16.44 | | | | |
| Bayhydrol XP 2637 | | | | 10 | | 98 | 5.00 | 60.0. | 95.0 |
| Polyisocyanate of Ex. 2 | 23.54 | 12.8 | 21.1 | 18.95 | 20 | | 59.0 | 23.6 | 1.87 |
| Cymel 327 | | 44.8 | | | 5 | | | | |
| Bayhydur BL XP 2669 | | | 21.1 | 18.95 | 20 | | | | |
| Bayhydur TP LS 2310 | | | 21.1 | 18.95 | 20 | | | | |
| Impranil DLC-F | | | | | | | | | |
| Dipropylene glycol | 1.6 | 1.6 | 1.6 | 1.6 | 1.6 | 1.6 | 1.60 | 1.60 | 1.60 |
| Silquest A-189 Silane | 0.2 | 0.2 | 0.2 | 0.2 | 0.2 | 0.2 | 0.20 | 0.20 | 0.20 |
| Dynasylan AMEO | 0.2 | 0.2 | 0.2 | 0.2 | 0.2 | 0.2 | 0.20 | 0.20 | 0.20 |
| Formulation Results | | | | | | | | | |
| NCO:OH | 0.2 | 0.2 | 1.04 | 1.04 | 1.04 | N/A | 1.04 | 1.04 | 1.04 |
| Coating Properties | | | | | | | | | |
| FISHER AFT (mils) | 0.67 | 0.58 | 0.52 | 0.62 | 0.54 | 0.51 | 0.37 | 0.38 | 0.39 |
| DIRECT (in-lbs) | 160 | 20 | 160 | 160 | 40 | 160 | 160 | 160 | 160 |
| REVERSE (in-lbs) | 160 | 10 | 160 | 160 | 10 | 160 | 160 | 160 | 160 |
| Fischer Microhardness (N/mm²) | 79 | 17 | 170 | 117 | 168 | 5 | 83.7 | 15.9 | 9.3 |
| Before Caustic Adhesion (scribe) | pass | Pass | pass | pass | pass | pass | pass | pass | pass |
| After Caustic Adhesion (scribe) | pass | Pass | pass | pass | pass | pass | pass | pass | pass |
| After Caustic Film Loss (mg) | 16.3 | 19.2 | 8.0 | 6.7 | 14.7 | 7.3 | 13.6 | 16.7 | 16.2 |

The pigmented formulation is prepared as follows. 87.33 parts of formulation shown in example C was mixed with 12.67 parts of red pigment paste to prepare a red coating formulation. Similarly 93.72 parts of formulation shown in example D was mixed with 6.28 parts of black pigment paste to prepare a black coating formulation. Also, 76.78 parts of formulation shown in example E was mixed with 23.22 parts of aluminum pigment paste to prepare a metallic coating formulation. The formulations were applied on bottles and cured at 170°C for 30 min. The resulting coatings had excellent adhesion and caustic resistance.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. An aqueous polyurethane coating composition comprising:
1) 1 to 99 wt.% based on solid polymer of the reaction product of:
a) a polyol component, which is soluble or dispersible in water and is the reaction product of a polyisocyanate component containing 50 to 100 wt. % of an aliphatic diisocyanate, a polyol component containing one or more polyether polyols and having an OH number of 25 to 350 mg KOH/g solids and an isocyanate-reactive component containing at least one group capable of salt formation; and
b) polyisocyanate component, which is soluble or dispersible in water, has blocked isocyanate groups and is the reaction product of one or more polyisocyanates having an isocyanurate group content of 0 to 30 wt. %, a reversible, monofunctional blocking agent for isocyanate groups, a nonionic hydrophilic component and a stabilizing component which has 1 to 2 hydrazide groups and a molecular weight of 74 to 300 g/mol; and
2) 1 to 99 wt.% based on solid polymer of an aqueous polyurethane dispersion prepared from at least one polycarbonate polyol,
wherein the total wt. % of components 1) and 2) add up to 100%.

2. The aqueous polyurethane coating composition of claim 1, wherein:
component a) comprises the reaction product of
A1) 20 to 60 wt.% of a polyisocyanate component containing 50 to 100 wt.% of an aliphatic diisocyanate and 0 to 50 wt.% of other organic polyisocyanates having a molecular weight of 140 to 1500 g/mol,
B1) 20 to 60 wt.% of a polyol component containing one or more polyether polyols and having an OH number of 25 to 350 mg KOH/g solids,
C1) 2 to 12 wt.% of an anionic or potential anionic component containing one or more compounds having at least one isocyanate-reactive group and at least one group capable of salt formation, which may optionally be present in at least partially neutralized form,
D1) 0 to 12 wt.% of a nonionic hydrophilic component containing one or more compounds which are mono- or difunctional for purposes of the isocyanate addition reaction and have at least one lateral or terminal hydrophilic polyether chain,
E1) 0 to 15 wt.% of one or more polyhydric alcohols having 2 to 4 hydroxyl groups and a molecular weight of 62 to 250 g/mol,
F1) 0 to 15 wt.% of one or more (cyclo)aliphatic polyamines having 2 to 4 amino groups and a molecular weight of 60 to 300 g/mol,
G1) 0 to 30 wt.% of one or more (cyclo)aliphatic polyamino/hydroxyl compounds having a total of 2 to 4 hydroxyl and amino groups and a molecular weight of 61 to 300 g/mol and
H1) 0 to 15 wt.% of one or more stabilizing components which are mono- or difunctional for purposes of the isocyanate addition reaction and have 1 to 2 hydrazide groups and a molecular weight of 74 to 300 g/mol,
wherein the percentages of A1) to H1) add up to 100% and
component b) comprises the reaction product of
A2) 40 to 80 wt.% of a polyisocyanate having an isocyanurate group content (calculated as C₃N₃O₃; molecular weight = 126 g/mol) of 0 to 30 wt.% and prepared from one or more diisocyanates having a molecular weight of 140 to 350 g/mol with
B2) 5 to 30 wt.% of one or more reversible blocking agents for isocyanate groups which are monofunctional for purposes of the isocyanate addition reaction,
C2) 0 to 15 wt.% of an anionic or potential anionic component containing one or more compounds having at least one isocyanate-reactive group and at least one group capable of salt formation, which may optionally be present in at least partially neutralized form,
D2) 5 to 30 wt.% of a nonionic hydrophilic component containing one or more compounds which are mono- or difunctional for purposes of the isocyanate addition reaction and have at least one lateral or terminal hydrophilic polyether chain,
E2) 0 to 15 wt.% of one or more polyhydric alcohols having 2 to 4 hydroxyl groups and a molecular weight of 62 to 250 g/mol,
F2) 0 to 15 wt.% of one or more (cyclo)aliphatic polyamines having 2 to 4 amino groups and a the molecular weight of 60 to 300 g/mol and
G2) 0.5 to 15 wt.% of one or more stabilizing components which are mono- or difunctional for purposes of the isocyanate addition reaction and have 1 to 2 hydrazide groups and a molecular weight of 74 to 300 g/mol,
wherein the percentages of A2) to G2) add up to 100%, provided that the equivalent ratio of blocked isocyanate groups of component b) to hydroxyl groups of component a) is at least 0.05:1.

3. The composition of claim 1 or 2, further comprising an adhesion promoter.

4. The composition of claim 3, wherein the adhesion promoter comprises at least one silane-functional compound.

5. The composition of claim 3, wherein the adhesion promoter is selected from the group consisting of γ-mercaptopropyltrimethoxysilane, 3-aminopropyltriethoxysilane, 3-aminopropylsilane hydrolysate, 3-glycidyloxypropyltriethoxysilane and mixtures thereof.

6. The composition of claim 1 or 2, wherein component a) further comprises an hydroxy-functional polyacrylic dispersion.

7. The composition of claim 2, wherein component b) is prepared from a mixture of blocked polyisocyanates, the blocked polyisocyanates prepared from diisocyanates selected from the group consisting of 4,4'-diisocyanatodicyclohexyl-methane, 1-isocyanato-3,3,5-trimethyl-5-isocyanatomethylcyclohexane, 1,6-diisocyanatohexane and mixtures of these diisocyanates.

8. The composition of claim 1, comprising, based on a) and b) 5 to 95 wt.% component a), 5 to 95 wt.% component b), and based on solid polymers of the component 1) and 2), 1 to 99 wt.% component 1) and 1 to 99 wt.% component 2), with independently the total of components a) and b) being 100 wt.%, and the totals of 1) and 2) being 100 wt.%.

9. The composition of claim 1, wherein the equivalent ratio of blocked isocyanate groups of component b) to hydroxyl groups of component a) is at between 1:1 and 10:1.

10. The composition of claim 1, wherein the aqueous polyurethane dispersion is **characterized by** a glass transition temperature, Tg, of between -60°C and 0°C as measured by ASTM E2602-09 at a heating rate of 20° C per minute.

11. The composition of claim 1, wherein the aqueous polyurethane dispersion has a viscosity @ 25°C of between 50 and 1000 mPa·s at a concentration of 40 wt.% as measured by ASTM D2196-05.

12. The composition of claim 1, wherein the aqueous polyurethane dispersion is prepared from at least one polycarbonate polyol and an isocyanate selected from the group consisting of 4,4'-diisocyanatodicyclohexylmethane, isophorone diisocyanate, hexamethylene diisocyanate and 1-methyl-2,4(2,6)-diisocyanatocyclohexane and their mixtures.

13. The composition of claim 12, wherein the polycarbonate polyol has a number average molecular weight range 500 to 6000 g/mol.

14. A substrate at least partially coated with the coating composition of claim 1.

15. The substrate of claim 14, wherein the substrate is glass.

16. A glass bottle at least partially coated with the coating composition of claim 1.

17. The glass bottle of claim 16, wherein the glass bottle is a refillable glass bottle.

18. The glass bottle of claim 16, wherein the glass bottle is a non-refillable glass bottle.

19. The glass bottle of claim 16, wherein the coating composition is at least partially applied over a decorative organic or inorganic coating on the glass bottle.

20. The glass bottle of claim 16, wherein the glass bottle is treated with a primer coating prior to application of the coating composition.

21. The composition of claim 1 further comprising pigments and colorants.

22. The composition of claim 1, comprising, based on a) and b) 10 to 90 wt.% component a), 10 to 90 wt.% component b), and based on solid polymers of the component 1) and 2), 15 to 85 wt.% component 1) and 15 to 85 wt.% component 2), wherein independently the total of components a) and b) is 100 wt.%, and the total of 1) and 2) is 100 wt.%.

23. The composition of claim 1, comprising, based on a) and b) 15 to 85 wt.% component a), 15 to 85 wt.% component b), and based on solid polymers of the component 1) and 2), 50 to 80 wt.% component 1) and 20 to 50 wt.% component 2), wherein independently the total of components a) and b) is 100 wt.%, and the total of 1) and 2) is 100 wt.%.

## Patentansprüche

1. Wässrige Polyurethan-Beschichtungszusammensetzung, enthaltend:
1) 1 bis 99 Gew.-%, bezogen auf festes Polymer, des Reaktionsprodukts von:
a) einer in Wasser löslichen oder dispergierbaren Polyolkomponente, bei der es sich um das Reaktionsprodukt einer Polyisocyanatkomponente, die 50 bis 100 Gew.-% eines aliphatischen Diisocyanats enthält, einer Polyolkomponente, die ein oder mehrere Polyetherpolyole enthält und eine OH-Zahl von 25 bis 350 mg KOH/g Substanz aufweist, und einer isocyanatreaktiven Komponente mit mindestens einer zur Salzbildung befähigten Gruppe handelt; und
b) einer in Wasser löslichen oder dispergierbaren Polyisocyanatkomponente mit blockierten Isocyanatgruppen, bei der es sich um das Reaktionsprodukt von einem oder mehreren Polyisocyanaten mit einem Isocyanuratgruppengehalt von 0 bis 30 Gew.-%, einem reversiblen monofunktionellen Blockierungsmittel für Isocyanatgruppen, einer nichtionisch-hydrophilen Komponente und einer Stabilisierungskomponente mit 1 bis 2 Hydrazidgruppen und einem Molekulargewicht von 74 bis 300 g/mol handelt; und
2) 1 bis 99 Gew.-%, bezogen auf festes Polymer, einer aus mindestens einem Polycarbonatpolyol hergestellten wässrigen Polyurethandispersion,
wobei sich die gesamten Gew.-%-Anteile der Komponenten 1) und 2) zu 100% summieren.

2. Wässrige Polyurethan-Beschichtungszusammensetzung nach Anspruch 1, wobei:
Komponente a) das Reaktionsprodukt von:
A1) 20 bis 60 Gew.-% einer Polyisocyanatkomponente, die 50 bis 100 Gew.-% eines aliphatischen Diisocyanats und 0 bis 50 Gew.-% andere organische Polyisocyanate mit einem Molekulargewicht von 140 bis 1500 g/mol enthält,
B1) 20 bis 60 Gew.-% einer Polyolkomponente, die ein oder mehrere Polyetherpolyole enthält und eine OH-Zahl von 25 bis 350 mg KOH/g Substanz aufweist,
C1) 2 bis 12 Gew.-% einer anionischen oder potentiell anionischen Komponente, die eine oder mehrere Verbindungen mit mindestens einer isocyanatreaktiven Gruppe und mindestens einer zur Salzbildung befähigten Gruppe, die gegebenenfalls in zumindest teilweise neutralisierter Form vorliegen kann, enthält,
D1) 0 bis 12 Gew.-% einer nichtionisch-hydrophilen Komponente, die eine oder mehrere Verbindungen, die im Sinne der Isocyanat-Additionsreaktion mono- oder difunktionell sind und mindestens eine seitenständige oder endständige hydrophile Polyetherkette aufweisen,
E1) 0 bis 15 Gew.-% eines oder mehrerer mehrwertiger Alkohole mit 2 bis 4 Hydroxylgruppen und einem Molekulargewicht von 62 bis 250 g/mol,
F1) 0 bis 15 Gew.-% eines oder mehrerer (cyclo)aliphatischer Polyamine mit 2 bis 4 Aminogruppen und einem Molekulargewicht von 60 bis 300 g/mol,
G1) 0 bis 30 Gew.-% einer oder mehrerer (cyclo)aliphatischer Polyamino/-hydroxylverbindungen mit insgesamt 2 bis 4 Hydroxyl- und Aminogruppen und einem Molekulargewicht von 61 bis 300 g/mol und
H1) 0 bis 15 Gew.-% einer oder mehrerer Stabilisierungskomponenten, die im Sinne der Isocyanat-Additionsreaktion mono- oder difunktionell sind und 1 bis 2 Hydrazidgruppen und ein Molekulargewicht von 74 bis 300 g/mol aufweisen,
umfasst, wobei sich die Prozentangaben von A1) bis H1) zu 100% summieren, und
Komponente b) das Reaktionsprodukt von
A2) 40 bis 80 Gew.-% eines aus einem oder mehreren Diisocyanaten mit einem Molekulargewicht von 140 bis 350 g/mol hergestellten Polyisocyanats mit einem Isocyanuratgruppengehalt (berechnet als C₃N₃O₃; Molekulargewicht = 126 g/mol) von 0 bis 30 Gew.-% mit
B2) 5 bis 30 Gew.-% eines oder mehrerer reversible Blockierungsmittel für Isocyanatgruppen, die im Sinne der Isocyanat-Additionsreaktion monofunktionell sind,
C2) 0 bis 15 Gew.-% einer anionischen oder potentiell anionischen Komponente, die eine oder mehrere Verbindungen mit mindestens einer isocyanatreaktiven Gruppe und mindestens einer zur Salzbildung befähigten Gruppe, die gegebenenfalls in zumindest teilweise neutralisierter Form vorliegen kann, enthält,
D2) 5 bis 30 Gew.-% einer nichtionischhydrophilen Komponente, die eine oder mehrere Verbindungen, die im Sinne der Isocyanat-Additionsreaktion mono- oder difunktionell sind und mindestens eine seitenständige oder endständige hydrophile Polyetherkette aufweisen,
E2) 0 bis 15 Gew.-% eines oder mehrerer mehrwertiger Alkohole mit 2 bis 4 Hydroxylgruppen und einem Molekulargewicht von 62 bis 250 g/mol,
F2) 0 bis 15 Gew.-% eines oder mehrerer (cyclo)aliphatischer Polyamine mit 2 bis 4 Aminogruppen und einem Molekulargewicht von 60 bis 300 g/mol,
G2) 0,5 bis 15 Gew.-% einer oder mehrerer Stabilisierungskomponenten, die im Sinne der Isocyanat-Additionsreaktion mono- oder difunktionell sind und 1 bis 2 Hydrazidgruppen und ein Molekulargewicht von 74 bis 300 g/mol aufweisen,
umfasst, wobei sich die Prozentangaben von A2) bis G2) zu 100% summieren, mit der Maßgabe, dass das Äquivalentverhältnis von blockierten Isocyanatgruppen der Komponente b) zu Hydroxylgruppen der Komponente a) mindestens 0,05:1 beträgt.

3. Zusammensetzung nach Anspruch 1 oder 2, die ferner einen Haftvermittler enthält.

4. Zusammensetzung nach Anspruch 3, wobei der Haftvermittler mindestens eine silanfunktionelle Verbindung umfasst.

5. Zusammensetzung nach Anspruch 3, wobei der Haftvermittler aus der Gruppe bestehend aus γ-Mercaptopropyltrimethoxysilan, 3-Aminopropyltriethoxysilan, 3-Aminopropylsilan-Hydrolysat, 3-Glycidyloxypropyltriethoxysilan und Mischungen davon ausgewählt ist.

6. Zusammensetzung nach Anspruch 1 oder 2, wobei Komponente a) ferner eine Dispersion eines hydroxyfunktionellen Polyacrylats umfasst.

7. Zusammensetzung nach Anspruch 2, wobei Komponente b) aus einem Gemisch von blockierten Polyisocyanaten hergestellt wird, wobei die blockierten Polyisocyanate aus Diisocyanaten aus der Gruppe bestehend aus 4,4'-Diisocyanatodicyclohexylmethan, 1-Isocyanato-3,3,5-trimethyl-5-isocyanatomethylcyclohexan, 1,6-Diisocyanatohexan und Gemischen dieser Diisocyanate hergestellt werden.

8. Zusammensetzung nach Anspruch 1, enthaltend, bezogen auf a) und b), 5 bis 95 Gew.-% Komponente a), 5 bis 95 Gew.-% Komponente b) und, bezogen auf feste Polymere der Komponente 1) und 2), 1 bis 99 Gew.-% Komponente 1) und 1 bis 99 Gew.-% Komponente 2), wobei unabhängig die Summe der Komponenten a) und b) 100 Gew.-% beträgt und die Summe von 1) und 2) 100 Gew.-% beträgt.

9. Zusammensetzung nach Anspruch 1, wobei das Äquivalentverhältnis von blockierten Isocyanatgruppen der Komponente b) zu Hydroxylgruppen der Komponente a) zwischen 1:1 und 10:1 liegt.

10. Zusammensetzung nach Anspruch 1, wobei die wässrige Polyurethandispersion durch eine gemäß ASTM E2602-09 bei einer Heizrate von 20°C pro Minute gemessene Glasübergangstemperatur Tg zwischen -60°C und 0°C gekennzeichnet ist.

11. Zusammensetzung nach Anspruch 1, wobei die wässrige Polyurethandispersion eine gemäß ASTM D2196-05 gemessene Viskosität bei 25° C zwischen 50 und 1000 mPa·s bei einer Konzentration von 40 Gew.-% aufweist.

12. Zusammensetzung nach Anspruch 1, wobei die wässrige Polyurethandispersion aus mindestens einem Polycarbonatpolyol und einem Isocyanat aus der Gruppe bestehend aus 4,4'-Diisocyanato-dicyclohexylmethan, Isophorondiisocyanat, Hexamethylendiisocyanat und 1-Methyl-2,4(2,6)-diisocyanatocyclohexan und Gemischen davon hergestellt wird.

13. Zusammensetzung nach Anspruch 12, wobei das Polycarbonatpolyol ein zahlenmittleres Molekulargewicht im Bereich von 500 bis 6000 g/mol aufweist.

14. Substrat, das zumindest teilweise mit der Beschichtungszusammensetzung nach Anspruch 1 beschichtet ist.

15. Substrat nach Anspruch 14, wobei es sich bei dem Substrat um Glas handelt.

16. Glasflasche, die zumindest teilweise mit der Beschichtungszusammensetzung nach Anspruch 1 beschichtet ist.

17. Glasflasche nach Anspruch 16, wobei es sich bei der Glasflasche um eine wiederbefüllbare Glasflasche handelt.

18. Glasflasche nach Anspruch 16, wobei es sich bei der Glasflasche um eine nicht wiederbefüllbare Glasflasche handelt.

19. Glasflasche nach Anspruch 16, wobei die Beschichtungszusammensetzung zumindest teilweise über einer dekorativen organischen oder anorganischen Beschichtung auf der Glasflasche aufgebracht ist.

20. Glasflasche nach Anspruch 16, wobei die Glasflasche vor dem Aufbringen der Beschichtungszusammensetzung mit einer Grundierung behandelt wird.

21. Zusammensetzung nach Anspruch 1, die ferner Pigmente und Farbmittel enthält.

22. Zusammensetzung nach Anspruch 1, enthaltend, bezogen auf a) und b), 10 bis 90 Gew.-% Komponente a), 10 bis 90 Gew.-% Komponente b) und, bezogen auf feste Polymere der Komponente 1) und 2), 15 bis 85 Gew.-% Komponente 1) und 15 bis 85 Gew.-% Komponente 2), wobei unabhängig die Summe der Komponenten a) und b) 100 Gew.-% beträgt und die Summe von 1) und 2) 100 Gew.-% beträgt.

23. Zusammensetzung nach Anspruch 1, enthaltend, bezogen auf a) und b), 15 bis 85 Gew.-% Komponente a), 15 bis 85 Gew.-% Komponente b) und, bezogen auf feste Polymere der Komponente 1) und 2), 50 bis 80 Gew.-% Komponente 1) und 20 bis 50 Gew.-% Komponente 2), wobei unabhängig die Summe der Komponenten a) und b) 100 Gew.-% beträgt und die Summe von 1) und 2) 100 Gew.-% beträgt.

## Revendications

1. Composition aqueuse de revêtement de polyuréthane comprenant :
1) 1 à 99 % en poids par rapport au polymère solide du produit de réaction :
a) d'un constituant polyol, qui est soluble ou susceptible d'être dispersé dans l'eau et est le produit de réaction d'un constituant polyisocyanate contenant 50 à 100 % en poids d'un diisocyanate aliphatique, d'un constituant polyol contenant un ou plusieurs polyéther-polyols et ayant un indice d'hydroxyle de 25 à 350 mg KOH/g de matières sèches et d'un constituant réactif avec la fonction isocyanate contenant au moins un groupe capable de former un sel ; et
b) d'un constituant polyisocyanate, qui est soluble ou susceptible d'être dispersé dans l'eau, comporte des groupes isocyanate bloqués et est le produit de réaction d'un ou plusieurs polyisocyanates ayant une teneur en groupes isocyanurate de 0 à 30 % en poids, d'un agent bloquant monofonctionnel, réversible, pour groupes isocyanate, d'un constituant hydrophile non ionique et d'un constituant stabilisant qui comporte 1 à 2 groupes hydrazide et possède une masse moléculaire de 74 à 300 g/mol ; et
2) 1 à 99 % en poids par rapport au polymère solide d'une dispersion aqueuse de polyuréthane préparée à partir d'au moins un polycarbonate-polyol,
dans laquelle le % total en poids des constituants 1) et 2) se monte à 100%.

2. Composition aqueuse de revêtement de polyuréthane selon la revendication 1, dans laquelle :
le constituant a) comprend le produit de réaction de
A1) 20 à 60 % en poids d'un constituant polyisocyanate contenant 50 à 100 % en poids d'un diisocyanate aliphatique et 0 à 50 % en poids d'autres polyisocyanates organiques ayant une masse moléculaire de 140 à 1500 g/mol,
B1) 20 à 60 % en poids d'un constituant polyol contenant un ou plusieurs polyéther-polyols et ayant un indice d'hydroxyle de 25 à 350 mg KOH/g de matières sèches,
C1) 2 à 12 % en poids d'un constituant anionique ou anionique potentiel contenant un ou plusieurs composés comportant au moins un groupe réactif avec la fonction isocyanate et au moins un groupe capable de former un sel, qui peut éventuellement être présent sous une forme au moins partiellement neutralisée,
D1) 0 à 12 % en poids d'un constituant hydrophile non ionique contenant un ou plusieurs composés qui sont mono- ou difonctionnels pour les besoins de la réaction d'addition d'isocyanate et possèdent au moins une chaîne polyéther hydrophile latérale ou terminale,
E1) 0 à 15 % en poids d'un ou plusieurs alcools poly-hydroxylés comportant 2 à 4 groupes hydroxyle et possédant une masse moléculaire de 62 à 250 g/mol,
F1) 0 à 15 % en poids d'une ou plusieurs polyamines (cyclo)aliphatiques comportant 2 à 4 groupes amino et possédant une masse moléculaire de 60 à 300 g/mol,
G1) 0 à 30 % en poids d'un ou plusieurs composés poly-amino (cyclo)aliphatique/hydroxyle comportant un total de 2 à 4 groupes hydroxyle et amino et possédant une masse moléculaire de 61 à 300 g/mol et
H1) 0 à 15 % en poids d'un ou plusieurs constituants stabilisants qui sont mono- ou difonctionnels pour les besoins de la réaction d'addition d'isocyanate et comportent 1 à 2 groupes hydrazide et possèdent une masse moléculaire de 74 à 300 g/mol,
dans laquelle les pourcentages de A1) à H1) s'additionnent pour faire 100% et
le constituant b) comprend le produit de réaction de
A2) 40 à 80 % en poids d'un polyisocyanate ayant une teneur en groupes isocyanurate (calculée en C₃N₃O₃ ; masse moléculaire = 126 g/mol) de 0 à 30 % en poids et préparé à partir d'un ou plusieurs diisocyanates possédant une masse moléculaire de 140 à 350 g/mol avec
B2) 5 à 30 % en poids d'un ou plusieurs agents bloquants réversibles pour groupes isocyanate qui sont monofonctionnels pour les besoins de la réaction d'addition d'isocyanate,
C2) 0 à 15 % en poids d'un constituant anionique ou anionique potentiel contenant un ou plusieurs composés comportant au moins un groupe réactif avec la fonction isocyanate et au moins un groupe capable de former un sel, qui peut éventuellement être présent sous une forme au moins partiellement neutralisée,
D2) 5 à 30 % en poids d'un constituant hydrophile non ionique contenant un ou plusieurs composés qui sont mono- ou difonctionnels pour les besoins de la réaction d'addition d'isocyanate et possèdent au moins une chaîne polyéther hydrophile latérale ou terminale,
E2) 0 à 15 % en poids d'un ou plusieurs alcools poly-hydroxylés comportant 2 à 4 groupes hydroxyle et possédant une masse moléculaire de 62 à 250 g/mol,
F2) 0 à 15 % en poids d'une ou plusieurs polyamines (cyclo)aliphatiques comportant 2 à 4 groupes amino et possédant une masse moléculaire de 60 à 300 g/mol et
G2) 0,5 à 15 % en poids d'un ou plusieurs constituants stabilisants qui sont mono- ou difonctionnels pour les besoins de la réaction d'addition d'isocyanate et comportent 1 à 2 groupes hydrazide et possèdent une masse moléculaire de 74 à 300 g/mol,
dans laquelle les pourcentages de A2) à G2) s'additionnent pour faire 100%, sous réserve que le rapport entre le nombre d'équivalents de groupes isocyanate bloqués de constituant b) et le nombre d'équivalents de groupes hydroxyle du constituant a) soit d'au moins 0,05:1.

3. Composition selon la revendication 1 ou 2, comprenant en outre un promoteur d'adhérence.

4. Composition selon la revendication 3, dans laquelle le promoteur d'adhérence comprend au moins un composé à fonction silane.

5. Composition selon la revendication 3, dans laquelle le promoteur d'adhérence est choisi dans le groupe constitué par le γ-mercaptopropyltriméthoxysilane, le 3-aminopropyltriéthoxysilane, un hydrolysat de 3-amino-propylsilane, le 3-glycidyloxypropyltriéthoxysilane et des mélanges de ceux-ci.

6. Composition selon la revendication 1 ou 2, dans laquelle le constituant a) comprend en outre une dispersion de polyacrylique hydroxy-fonctionnel.

7. Composition selon la revendication 2, dans laquelle le constituant b) est préparé à partir d'un mélange de polyisocyanates bloqués, les polyisocyanates bloqués étant préparés à partir de diisocyanates choisis dans le groupe constitué par le 4,4'-diisocyanatodicyclo-hexylméthane, le 1-isocyanato-3,3,5-triméthyl-5-isocya-natométhylcyclohexane, le 1,6-diisocyanatohexane et des mélanges de ces diisocyanates.

8. Composition selon la revendication 1, comprenant, sur la base de a) et b), 5 à 95 % en poids de constituant a), 5 à 95 % en poids de constituant b), et sur la base des polymères solides des constituants 1) et 2), 1 à 99 % en poids de constituant 1) et 1 à 99 % en poids de constituant 2), indépendamment le total des constituants a) et b) étant de 100 % en poids, et le total de 1) et 2) étant de 100 % en poids.

9. Composition selon la revendication 1, dans laquelle le rapport entre le nombre d'équivalents de groupes isocyanate bloqués du constituant b) et le nombre d'équivalents de groupes hydroxyle du constituant a) est compris entre 1:1 et 10:1.

10. Composition selon la revendication 1, dans laquelle la dispersion aqueuse de polyuréthane est **caractérisée par** une température de transition vitreuse, Tg, comprise entre -60°C et 0°C, mesurée par ASTM E2602-09 à une vitesse de montée en température de 20°C par minute.

11. Composition selon la revendication 1, dans laquelle la dispersion aqueuse de polyuréthane possède une viscosité à 25°C comprise entre 50 et 1000 mPa.s à une concentration de 40 % en poids, mesurée par ASTM D2196-05.

12. Composition selon la revendication 1, dans laquelle la dispersion aqueuse de polyuréthane est préparée à partir d'au moins un polycarbonate-polyol et d'un isocyanate choisi dans le groupe constitué par le 4,4'-di-isocyanatodicyclohexylméthane, l'isophorone diisocyanate, l'hexaméthylène diisocyanate et le 1-méthyl-2,4(2,6)-diisocyanatocyclohexane et leurs mélanges.

13. Composition selon la revendication 12, dans laquelle le polycarbonate-polyol possède une masse moléculaire moyenne en nombre allant de 500 à 6000 g/mol.

14. Substrat au moins partiellement revêtu avec la composition de revêtement selon la revendication 1.

15. Substrat selon la revendication 14, dans lequel le substrat est du verre.

16. Bouteille en verre au moins partiellement revêtue avec la composition de revêtement selon la revendication 1.

17. Bouteille en verre selon la revendication 16, dans laquelle la bouteille en verre est une bouteille en verre réutilisable.

18. Bouteille en verre selon la revendication 16, dans laquelle la bouteille en verre est une bouteille en verre non réutilisable.

19. Bouteille en verre selon la revendication 16, dans laquelle la composition de revêtement est au moins partiellement appliquée sur un revêtement décoratif organique ou inorganique sur la bouteille en verre.

20. Bouteille en verre selon la revendication 16, dans laquelle la bouteille en verre est traitée avec une couche d'impression avant l'application de la composition de revêtement.

21. Composition selon la revendication 1 comprenant en outre des pigments et des colorants.

22. Composition selon la revendication 1, comprenant, sur la base de a) et b), 10 à 90 % en poids de constituant a), 10 à 90 % en poids de constituant b), et sur la base des polymères solides des constituants 1) et 2), 15 à 85 % en poids de constituant 1) et 15 à 85 % en poids de constituant 2), dans laquelle indépendamment le total des constituants a) et b) est de 100 % en poids, et le total de 1) et 2) est de 100 % en poids.

23. Composition selon la revendication 1, comprenant, sur la base de a) et b), 15 à 85 % en poids de constituant a), 15 à 85 % en poids de constituant b), et sur la base des polymères solides des constituants 1) et 2), 50 à 80 % en poids de constituant 1) et 20 à 50 % en poids de constituant 2), dans laquelle indépendamment le total des constituants a) et b) est de 100 % en poids, et le total de 1) et 2) est de 100 % en poids.
